# EUROPEAN PATENT APPLICATION

(11) **EP 4 768 129 A1**
(43) Date of publication of application: **01.07.2026**
(21) Application number: 25756815.4
(22) Date of filing: 09.01.2025
(51) Int. Cl.: B04C 5/14, C04B 35/56

(54) **IMPROVEMENT APPLIED TO A STATIC MACHINE ELEMENT KNOWN AS A DISCHARGE CHAMBER INTEGRATED INTO EQUIPMENT KNOWN AS A HYDROCYCLONE USED IN THE STAGE OF VERIFYING ORE PARTICLE SIZE QUALITY AFTER THE CRUSHING STAGE, AND PROCESS OF ASSEMBLY, COUPLING, AND UNCOUPLING THEREOF WITH RESPECT TO THE HYDROCYCLONE BODY**

(30) Priority: 22.02.2024 BR 102024003511
(71) Applicant: Haver & Boecker Latinoamericana Máquinas Limitada, 33255-360 Minas Gerais Barreiro Pedro Leopoldo (BR)
(72) Inventor: DE CARVALHO, Clayton Antônio, 13190-000 Monte Mor (BR); NILO RODRIGUES, Marcelo, 36412-040 Congonhas (BR)
(74) Representative: BSB Patentanwälte Schütte & Engelen Partnerschaft mbB
(86) International application number: PCT/BR2025/050006
(87) International publication number: WO 2025/175364

(57) **Abstract**

**"ENHANCEMENT APPLIED TO THE STATIC MACHINE ELEMENT DISCHARGE CHAMBER INTEGRATED INTO A DEVICE KNOWN AS A HYDROCYCLONE USED IN THE STAGE OF VERIFYING ORE PARTICLE SIZE QUALITY AFTER THE CRUSHING STAGE, AND ITS ASSEMBLY, COUPLING, AND DECOUPLING PROCESSES OF THE HYDROCYCLONE BODY"** represented by an evolutionary solution in the industrial and commercial sector of particle classification/separation equipment for ores that have undergone concentration, desliming, solids recovery, and closed grinding circuit procedures, with particular application in equipment known as hydrocyclones (Eq), wherein, in order to solve problems of premature wear and complex maintenance of the static machine element discharge chamber, the invention is embodied in an enhancement to its constructive concept, such that it becomes composed of three components: a lower part (10), a male quick-coupling part (20), and a fixed base (30). A concept of quick engagement/disengagement of the operational lower part (10) is introduced for verification of the integrity of the cut diameter (H), being distinguished by the fact that it is sufficient to perform the quick disengagement/engagement of the assembly comprising the lower part (10) and the male quick-fit coupling part (20)."

## Description

### TERMINOLOGY

For the purpose of better understanding the subject matter disclosed and claimed in the present invention patent, the meaning of certain terms and acronyms frequently cited throughout the specification is presented below, wherein:
- Industrial facility: for the purposes of the present invention, an industrial facility is considered to be, as defined herein, an industrial facility of interest, namely a mining facility (without limitation), for various raw materials, such as iron ore, copper ore, rock salt, among other related materials.
- Production line: for the purposes of the present invention, this may be understood as a form of mass production or a continuous production process in mining activities, carried out with the aid of machines and/or equipment specialized in various specific functions.
- Hydrocyclone: it is an equipment widely used in the mining industry with the function of separating solid material from liquid material from crushed ore, which is achieved using centrifugal force.
- Centrifugal pump: also referred to as a pure or radial centrifugal pump, it is a subclassification of turbopumps, the purpose of which is to provide fluid transport by flow, which in the present case is the flow of crushed ore.
- Discharge chamber: technically and commercially, it is identified by experts in quality-measuring equipment as the hydrocyclone, designated by the acronym APEX, positioned immediately below the vortex-forming section of such equipment, more specifically at its lower end.

The invention presents a funnel-shaped structural concept, wherein its upper diameter is slightly smaller than the diameter of the vortex-forming section of the hydrocyclone, causing the flow of crushed ore containing fewer particles of smaller particle size and lower density to be entrained by the secondary vortex and directed toward the upper orifice of the hydrocyclone, which is technically and commercially known as the "vortex finder", while the diluted slurry with smaller particle size exits through the overflow section stream.

The practical effect achieved lies in the fact that only a portion of the liquid slurry together with the denser particles (of larger particle size) is able to exit through the flow generated in the "underflow" section.
- Hydrocyclone batteries: the hydrocyclones are conveniently installed in the uppermost portion of the plant, since pumping is required, so that the feed to the other equipment can be carried out by gravity. In order to save space and ensure uniform distribution of the feed to the hydrocyclones, they are arranged in batteries, in a distributor known as a "manifold", which in the mining industry is commonly referred to as a "spider" (CHAVES, A. T. Teoria e prática do tratamento de ores, Volume 1 - 3rd edition - São Paulo: Signus editora, 2006).
- Maintenance: For the purposes of the present invention patent, it is defined as the action of maintaining, supporting, repairing, or otherwise preserving equipment, notably equipment used in mining activities, and specifically the hydrocyclone equipment.

The equipment maintenance activity is formed by a set of actions that help with the proper and correct functioning of equipment. In this context, maintenance is defined as comprising the following types:
- corrective;
- preventive;
- predictive; and
- detective.

For the purposes of the present invention patent, the maintenance system is directed to providing excellence in predictive and corrective maintenance.
- Predictive Maintenance: It is the activity carried out based on the modification of a "condition" or "performance" parameter, the monitoring of which follows a systematic methodology. The objective of this type of maintenance is to prevent failures in equipment or systems through the monitoring of various parameters, thereby allowing continuous operation of the equipment (in the present case, the hydrocyclone) for the longest possible period of time.
- Corrective Maintenance: according to Brazilian Standard NBR 5462, it is the maintenance performed on equipment (in the present case, the hydrocyclone) after the occurrence of a failure (or breakdown), intended to restore an item to conditions enabling it to perform a required function. Corrective maintenance is the most costly type of maintenance, requiring the greatest amount of time and causing the greatest losses to the company.
- NBR-5462: identification of the Brazilian technical standard issued by ABNT, dated November 1994, entitled Reliability and maintainability.
- Polymers: materials that present, in their molecular structure, relatively simple repeating units linked to one another by covalent bonds of the sp3 type, forming long chains and, therefore, resulting in compounds of high molecular weight.
- Thermosets: or thermoset polymers, are polymers whose polymer chains are linked through crosslinking or cross-linked bonds, which are primary intermolecular attractive forces.
- Polyurethane: known by the acronym "PU," is a polymer produced from the reaction of two substances: a polyol and a diisocyanate. The raw materials of the process may vary according to the requirements of the application. With respect to polyols, the most commonly used are castor oil and polybutadiene.
- Elastomer: is a polymer that has "elastic" properties, obtained after crosslinking. It withstands large deformations before rupture. The term rubber is a usual synonym for elastomer. Elastomeric materials such as pneumatic materials are usually based on natural rubber and synthetic rubber.
- Ceramic material: is a type of non-polymeric, non-metallic material and usually composed of metallic and non-metallic chemical elements linked by ionic bonding, covalent bonding, or both. Ceramic materials can be crystalline, partially crystalline, or amorphous.
- Silicon carbide: is a chemical compound of silicon and carbon. It is most familiar as a synthetic compound widely used as an abrasive, but it also occurs in nature in the form of the rare mineral called moissanite.
- Person skilled in the art: according to the understanding of scholars CHAVANNE, Albert & BURST, Jean-Jacques, in their work Droit de Lá Propriété Industrielle. Paris: Dalloz, 1993, p.53-55, by way of reference, the person skilled in the art is the technician who possesses the normal and average knowledge of the relevant technical field under study, which, for the purposes of the present invention, is a technician knowledgeable in technical specifications of equipment and procedures used in mining activities, and more specifically one familiar with procedures for verifying and maintaining the technical specifications of hydrocyclone equipment.
- Metallic material: materials mainly composed of metallic elements and having very similar characteristics, such as electrical and thermal conductivity, deformability, among others.
- IPC: International patent classification.

The set of terms, technologies, and technical concepts presented in this preliminary section should be considered for the correct understanding of the present invention patent, providing the necessary descriptive sufficiency to the body of this specification, and should also be used as a reference for studies in comparative analyses, whether with hypothetical solutions from the prior art that are relevant to the technical field of the invention (hydrocyclone equipment), disclosed and/or commercialized by third parties who are not the holders of the present patent, whether on a date prior or subsequent to the filing date thereof.

### DESCRIPTION OF THE FIGURES

To supplement the present description in order to obtain a better understanding of the state of the art, the identification of the problem to be solved, and the distinguishing features of the present invention, this specification includes, as an annex, a set of drawings, wherein:
Figure 1a is an illustrative representation, in the form of a photographic report, of a battery installation of hydrocyclones installed at the Sossego Mine, located in Canaã dos Carajás, State of Pará, Brazil, representative of the technical field of the present invention (Source: Figure 08, page 43 of the monograph entitled USOS E APLlCAÇÕES DO HIDROCICLONE NOS CAMPOS INDUSTRIAIS, presented by Graziele Santos Rocha, Federal University of Pará, Marabá-PA, 2010).
Figure 1b is an illustrative representation, in the form of a photographic report, of another hydrocyclone battery installation (Source: www.rochemt.com.br/imagens/cyclone1.jpg );
Figure 2a is an illustrative representation of the constructive concept of a hydrocyclone unit, revealing its structural configuration and highlighting the static machine element referred to as the "discharge chamber" (Source: Figure 02, page 19 of the monograph entitled USOS E APLlCAÇÕES DO HIDROCICLONE NOS CAMPOS INDUSTRIAIS, presented by Graziele Santos Rocha, Federal University of Pará, Marabá-PA, 2010). This being the paradigm for the development of the present invention;
Figure 2b is an illustrative representation of the operational concept of a hydrocyclone unit, revealing its structural configuration and highlighting the static machine element referred to as the "discharge chamber" (Source: Figure 02, page 19 of the monograph entitled USOS E APLlCAÇÕES DO HIDROCICLONE NOS CAMPOS INDUSTRIAIS, presented by Graziele Santos Rocha, Federal University of Pará, Marabá-PA, 2010). This being the paradigm for the development of the present invention;
Figure 3a is an illustrative representation, in a perspective view, of the conventional static machine element referred to as the "discharge chamber", highlighting its structural configuration;
Figure 3b is an illustrative representation, in a side, front, or rear view, of the conventional static machine element referred to as the "discharge chamber", highlighting its structural configuration;
Figure 3c is an illustrative exploded view, in a side, front, or rear orientation, of the conventional static machine element referred to as the "discharge chamber", highlighting its structural configuration;
Figure 3d is an illustrative cross-sectional view of the conventional static machine element referred to as the "discharge chamber", highlighting its structural configuration;
Figure 3e is an illustrative exploded cross-sectional view of the conventional static machine element referred to as the "discharge chamber", highlighting its structural configuration;
Figure 4 is an illustrative representation in cross-sectional view of the conventional static machine element "discharge chamber," highlighting its construction, particularly the lower channel of the static machine element discharge chamber, as well as its condition at the beginning of service (new part) and at the end of its service life;
Figures 5a and 5b are illustrative representations in side, front, or rear view, in enlarged detail, of the coupling region of the conventional static machine element "discharge chamber" at the lower portion of the conical section of the hydrocyclone equipment, highlighting the operation of decoupling of the conventional static machine element discharge chamber;
Figure 6a is an illustrative representation in perspective view of the enhanced static machine element "discharge chamber," highlighting its structural configuration;
Figure 6b is an illustrative representation in side, front, or rear view of the enhanced static machine element "discharge chamber," highlighting its structural configuration;
Figure 6c is an illustrative representation in side, front, or rear exploded view of the enhanced static machine element "discharge chamber," highlighting its structural configuration;
Figure 6d is an illustrative representation in cross-sectional view of the enhanced static machine element "discharge chamber," highlighting its structural configuration;
Figure 6e is an illustrative representation in exploded cross-sectional view of the enhanced static machine element "discharge chamber," highlighting its structural configuration.
Figures 7a and 7b are illustrative representations in side, front, or rear view, in enlarged detail, of the coupling region of the enhanced static machine element "discharge chamber" at the lower portion of the conical section of the hydrocyclone equipment, highlighting the decoupling operation of the element in this region of the equipment; and
Figure 8 is a graphical representation showing the relationship between period (days) and wear (millimeters), obtained with the use of the enhanced discharge chamber, or enhanced APEX.

### TECHNICAL FIELD

The present patent of invention, entitled as indicated in the heading and forming the subject matter of the description and claims herein, relates to an evolutionary solution that provides significant benefits in the industrial and commercial sector of equipment for classifying/separating mineral particles that have undergone concentration, desliming, solids recovery, and closed grinding circuit processes, with particular application in equipment known as hydrocyclones.

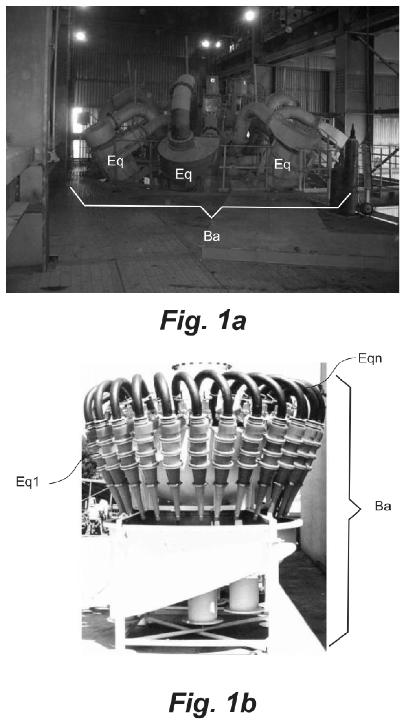

More specifically, hydrocyclone-type equipment (Eq) is applied after the ore grinding process and is commonly arranged in a plurality of hydrocyclones (Eq),. . . . (Eqn), in the form of batteries (Ba), as illustrated in Figures 1a and 1b.

By way of illustration only, on average, a battery (Ba) is composed of at least 22 hydrocyclones (Eq).

### DEMAND ADDRESSED BY THE INVENTION

### A. INTRODUCTION

The applicant conceived the present invention based on its technical expertise accumulated through years of practical experience in the management of mining-related activities, taking into account the particularities involved in the extraction and processing of ore removed from deposits, thereby achieving a privileged insight into the attributes and limitations identified with respect to the support equipment for this industrial activity widely used in the mining sector.

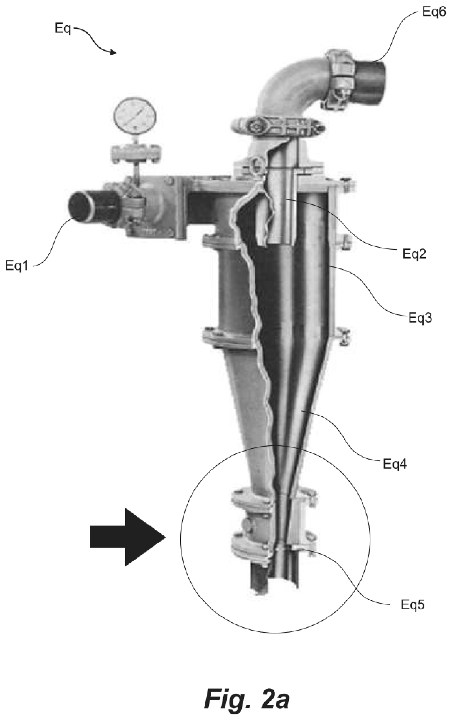

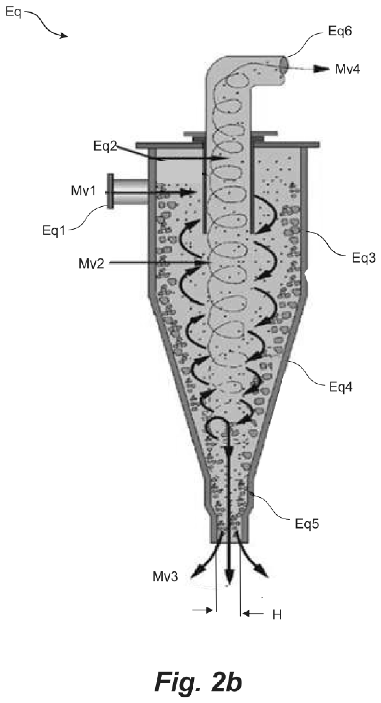

In this context, for the present invention, the identified demand is related to solids recovery and closed-circuit grinding activities, with particular application to equipment referred to as hydrocyclones (Eq), as illustrated in Figures 2a and 2b.

### B. DEMAND ADDRESSED BY THE INVENTION

The demand of the present invention is expressed by the identification of a set of needs related to ensuring the quality of the particle size distribution of ore particles after the grinding process, wherein, for this purpose, persons skilled in the art recognize the importance of the widespread use of batteries (Ba) of cyclone-type equipment (Eq), as shown in Figures 1a and 1b.

Having made this brief introduction, in which the technical field of the present invention is reinforced, persons skilled in the art have observed, during visits to customers in the mining sector, several complaints, among which particular emphasis is placed on those relating to the opinion of operators that, in order to maintain the specified quality of the cut/separation in the classification of the ore, as measured by the hydrocyclone equipment (Eq), as shown in Figure 2a, especially during the necessary maintenance activities, a set of desired requirements arises, namely:
- the operation of removing the static machine element referred to as the discharge chamber (Eq4), as shown in Figure 2a and also technically and commercially known by the acronym "APEX", be carried out in a swift manner, within a reduced time, and, as a consequence, in the most ergonomic manner possible;
- to mitigate the consumption of fastening components used to secure the static machine element referred to as the discharge chamber (Eq4) to the lower "Underflow" portion (Eq3) of the hydrocyclone equipment (Eq), as shown in Figure 2a; and
- to increase the service life of the static machine element referred to as the discharge chamber (Eq4), as shown in Figure 2a, by ensuring that the cut diameter (H) is maintained within its previously defined specification for the longest possible period of time, as illustrated in Figure 2b, and therefore enabling reuse after an inspection procedure, which, in simple terms, involves disassembling this component from the underflow section (Eq3) of the hydrocyclone equipment (Eq), as shown in Figures 2a and 2b.

### INVENTION REQUIREMENTS

In line with the demand addressed by the invention, the applicant conceived the *"ENHANCEMENT APPLIED TO THE STATIC MACHINE ELEMENT DISCHARGE CHAMBER INTEGRATED INTO A DEVICE KNOWN AS A HYDROCYCLONE USED IN THE STAGE OF VERIFYING ORE PARTICLE SIZE QUALITY AFTER THE CRUSHING STAGE, AND ITS ASSEMBLY, COUPLING, AND DECOUPLING PROCESSES OF THE HYDROCYCLONE BODY",* which is endowed with novelty associated with an inventive step, since it does not arise in an obvious or evident manner from techniques anticipated by the prior art, thereby providing advantages from technical, industrial and ore quality assurance standpoints, as will be demonstrated in a subsequent section of this specification.

In addition, the "invention" is suitable for industrial application and is economically viable, thereby meeting the strict requirements of patentability, particularly as an invention patent, since it embodies industrial applicability, novelty, and an inventive step.

Therefore, the invention relates to an embodiment that makes it feasible to meet the set of demands previously listed, while also complying with the requirements of patentability, since, as will be demonstrated, the enhancement conceived for the static machine element known as the "discharge chamber", aimed at expediting maintenance procedures and extending its service life, is not anticipated by solutions of this nature identified in the prior art, the deficiencies of which will be discussed in a subsequent section.

Lastly, it can be stated that a person skilled in the art, or skilled practitioner, when faced with the subject matter disclosed for the conventional static machine element referred to as the "discharge chamber", would not be able, based on the teachings thereby provided, to arrive at the solution disclosed and claimed in the present invention patent.

### TECHNICAL BACKGROUND

In order to ensure accuracy and to consolidate the context set forth in the introductory sections, a detailed explanation of the state of the art relating to conventional static machine elements referred to as "discharge chambers", also known by the acronym APEX, will be presented. Following a critical analysis thereof, once assessed by persons skilled in the art, their limiting aspects may be identified, thereby consolidating the identification of the set of demands previously listed.

### A. I UNDERSTAND THE STRUCTURE OF A HYDROCYCLONE EQUIPMENT

As illustrated in Figures 2a and 2b, the hydrocyclones (Eq) are composed of the elements listed herein:
- injector tube (Eq1), having the function of providing access and feeding crushed ore into the interior of the hydrocyclone (Eq);
- vortex finder (Eq2);
- upper section (Eq3), having a preferably cylindrical tubular cross-section;
- intermediate section (Eq4), having a preferably conical tubular cross-section;
- lower section (Eq5), in which the machine element discharge chamber is defined, also referred to by the acronym APEX, which conveys the flow of ore of larger particle size to the underflow; and
- upper outlet (Eq6), which conveys the flow of ore of smaller particle size to the overflow.

### B. OPERATING LOGIC OF A HYDROCYCLONE

As illustrated in Figure 2b, its operation is based on capturing and feeding the crushed ore flow (Mv1) into the interior of the upper section (Eq3), which develops into a downward spiral motion of this flow (Mv2), entraining the coarser and consequently heavier crushed ore particles (Mv3) toward the conical section (Eq4) and subsequently reaching the discharge chamber (Eq5), to finally exit through the lower outlet (Mv4), technically referred to as the "underflow" (descending flow or subflow).

In turn, the particles of smaller particle size and consequently lower density are carried toward the upper and central portion of the hydrocyclone (Eq), specifically the vortex finder (Eq2), generating an upward spiral motion (Mv5) that discharges through an upper outlet (Eq6), technically referred to as the "overflow" (overflow or ascending flow).

The flow rates of the "underflow" and "overflow" sectors are defined by the specification of their respective diameters and by the operating pressure to which the hydrocyclone (Eq) is subjected during operation, which, in turn, is generated by a centrifugal pump.

### C. PARADIGM OF INVENTION DEVELOPMENT

For the purposes of the present invention patent, the object of study for improvement is defined as the conventional static machine element discharge chamber (Eq5), also referred to by the acronym APEX.

### D. STATE OF THE ART

### D.1 CONVENTIONAL CONSTRUCTIVE CONCEPT

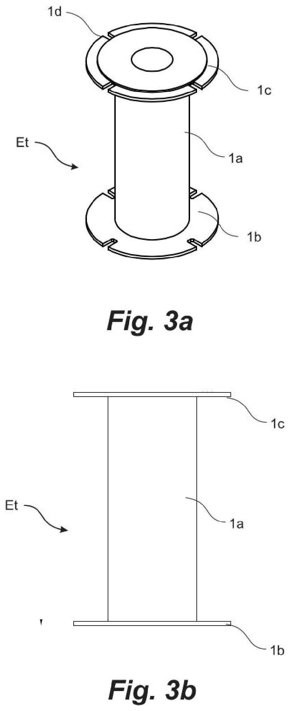

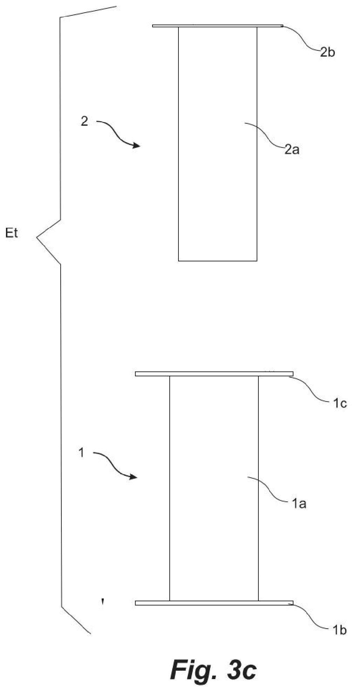

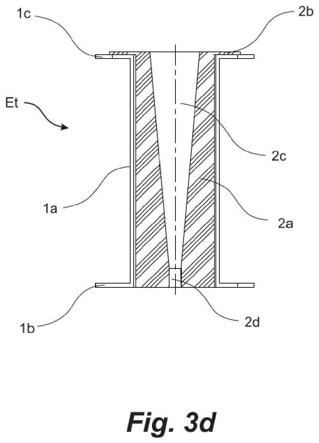

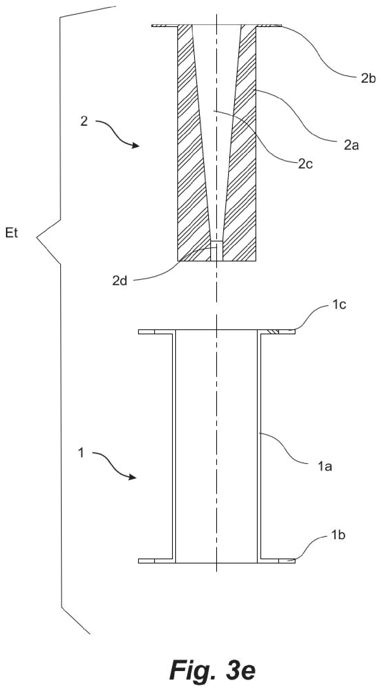

The static machine element discharge chamber (Et), also referred to by the acronym APEX, in a classical embodiment, is illustrated in Figures 3a to 3e, wherein, by way of reference, the components and their respective elements are defined:
- cradle (1), technically also referred to as an "APEX holder", formed by a tubular structure (1a), the nozzle ends of which define respective perpendicular flanges (1b) and (1c), having the function of housing the discharge chamber (2) itself, and being manufactured from a metallic material, preferably steel;
- discharge chamber (2), technically also referred to as the APEX, formed by a tubular structure (2a), provided at its upper nozzle with a perpendicular flange (2b), having an external diameter slightly smaller than the external diameter of the tubular structure (1a) of the cradle (1), and an internal diameter defined by an upper conical section (2c) that extends into a narrow tubular segment (2d), with a reduction in diameter at the lower portion and at the boundary of the lower section, having a constant diameter (H).

This part is preferably manufactured in polymeric material, specifically polyurethane.

### D.2 QUALITY CONTROL OPERATIONAL LOGIC

As evidenced in Figure 2b, in a referential manner, it is possible to understand the operational process of the hydrocyclone (Eq), in which the feed consisting of mineral slurry or other materials (Mv1) is supplied by means of centrifugal pumping.

The assessment of the reliability of the quality control procedure of the crushed ore flow (Mv3) involves sampling the crushed ore discharged through the underflow, that is, the material that ultimately passes through the conventional discharge chamber (Et), or conventional APEX.

In turn, the collected samples are inspected according to two previously defined parameters, namely:
(i) inspection of the "cut diameter" (H) defined at the constriction of the discharge chamber (Et), as shown in Figure 2b, which must fall within the values of a table that determines the specified "cut diameter" (H); the value obtained is then submitted for acceptance so as not to compromise the defined quality criteria of the crushed ore flow; and
(ii) sampling-based verification of the particle size distribution of the crushed ore flow (Mv3) that passes through the underflow.

Therefore, depending on the results obtained, a decision is made either to reuse the evaluated discharge chamber (Et) or to replace it.

### E. IDENTIFICATION OF PROBLEMS AND/OR RESTRICTIONS

Although the conventional constructive concept of the discharge chamber (Et) fulfills its purpose of ensuring the granulometry of the crushed ore that flows to the underflow (see Figure 2b), certain limitations are evident and are described below.

Those skilled in the art are aware that the mining process, from start to finish, is characterized as a continuous operation, which makes maintenance shutdowns significantly detrimental to the production system, since any stoppage, even if punctual, results in the creation of productivity bottlenecks.

In view of this scenario, the durability of the conventional discharge chamber (Et) is a determining factor in the production cycle; however, its wear is unavoidable, since it is directly related to the friction conditions caused by the contact of the crushed mineral flow (Mv3) with the internal walls of the conventional discharge chamber (Et), notably with the narrow tubular segment (2d).

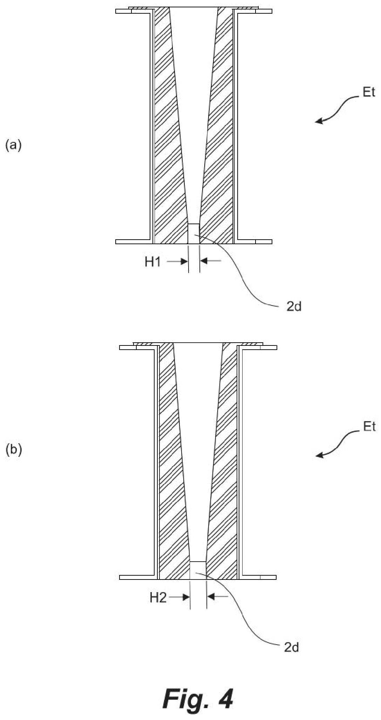

This inevitable wear condition is illustrated in Figure 4, where, in condition (a), namely the initial operating condition of the conventional discharge chamber (Et), a nominal cut diameter value (H1) is recorded for the narrow tubular segment (2d); that is, under this condition, the internal surface of this segment has not yet been subjected to friction from the crushed mineral flow (Mv3).

In a subsequent condition (b), after a certain operating time of the conventional discharge chamber (Et), a nominal worn cut diameter value (H2) is recorded for the narrow tubular segment (2d); that is, under this condition, the internal surface of this segment has been intensely subjected to friction from the crushed mineral flow (Mv3).

Therefore, once the irreversible impairment of this narrow tubular segment (2d) is established, its preventive or even corrective maintenance becomes unavoidable.

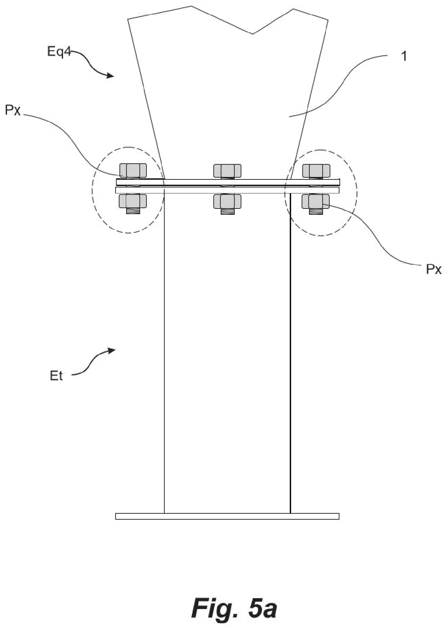

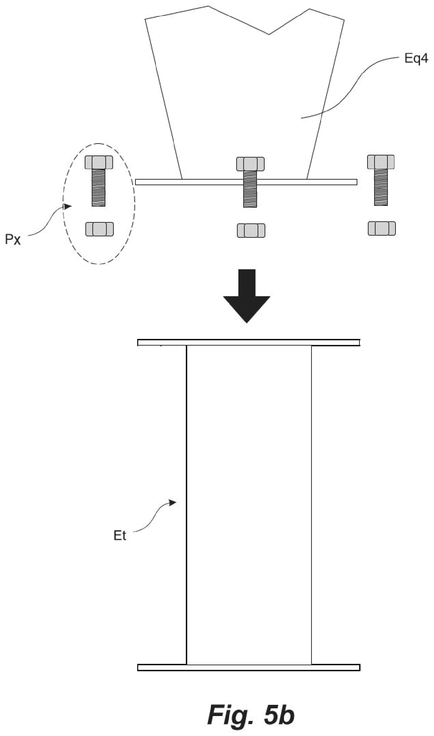

In turn, the removal of the conventional discharge chamber (Et) implies its decoupling from the intermediate section (Eq4), of preferably conical tubular section, as illustrated in Figures 5a and 5b, revealing the complexity, or difficulty, involved in the operation of removing the fastening elements (Px), generally formed by bolts and their respective washers and nuts.

Finally, once the desired decoupling has been achieved, the inspection of the operational condition of the conventional discharge chamber (Et) is carried out by measuring the wear of the narrow tubular segment (2d), as illustrated in Figure 4, for which a caliper or gauge is used.

In this context, the time required to inspect or replace a conventional discharge chamber (Et), also known by the acronym APEX, is estimated to range between 20 and 30 minutes; however, it should not be overlooked that this necessary condition for decoupling the conventional discharge chamber (Et) is amplified when, from a broader perspective, it must inevitably be applied to all hydrocyclones (Eq1),(Eq2), ... (Eqn) of a battery (Ba), averaging 22 units, as illustrated in Figures 1a and 1b.

Lastly, the need for frequent inspections for preventive maintenance of the conventional discharge chamber (Et) imposes physical demands on operators which, when combined with an unfavorable microenvironment, render the activity unhealthy.

### F. CAUSES OF THE IDENTIFIED PROBLEMS

### F.1 FROM THE POINT OF VIEW OF THE CONSTRUCTIVE CONCEPT OF THE CONVENTIONAL DISCHARGE CHAMBER (OR CONVENTIONAL APEX)

Premature wear resulting from the abrasive contact of ground ore particles with the internal surface of the classification tube and the compromise of the cut diameter (H), leading to a loss of reliability in the measurement obtained for ground ore classification, can be attributed to the material specification of which the conventional discharge chamber (Et) is constructed, the material frequently being thermoset polyurethane;

### F.2 FROM THE POINT OF VIEW OF MAINTENANCE OPERATION

Since it is a device designed as a single piece, or monoblock, during maintenance operations the conventional discharge chamber (Et) must be entirely removed, resulting in observed difficulties in execution (lack of ergonomics) and a high downtime of the equipment.

### PROPOSAL OF THE INVENTION

### A. OBJECTIVE

It is an objective of the present invention to solve the problems and limitations identified with respect to the constructive concept of the conventional discharge chamber (Et), thus resulting in the following set of features:
To ensure the reliability/quality of the required precision in the classification of crushed ore for the longest possible period, making the inspection operation as close as possible to the concept of assured quality.

Significant reduction in the need for maintenance operations (corrective or predictive) of the hydrocyclone equipment (Eq).
- Ensure productivity in a process of continuous nature;
- To eliminate the complexity of the maintenance operation of the hydrocyclone unit (Eq) comprising a battery of equipment (Ba), particularly the removal operation for inspection of the discharge chamber, making it simpler.
- To reduce the replacement cost of a discharge chamber; and
- To improve the working conditions during the maintenance operation of the discharge chamber.

### B. DISTINCTIVE FEATURE

To make the objective of the invention feasible, an enhancement was designed for the hydrocyclone (Eq), more specifically an enhancement applied to the static machine element discharge chamber (A), also known by the acronym APEX, which was designed with the following distinctive features:

### B.1 FROM THE POINT OF VIEW OF ENSURING DURABILITY

It becomes a device whose constructive concept is based on three components, namely:
- fixing base, functioning to provide fixation of the enhanced discharge chamber to the lower end of the underflow (Eq3) of the hydrocyclone equipment (Eq), becoming a permanent assembly component, and whose interior defines a female quick-fit coupling element;
- male quick-fit coupling part, which fits over the upper part of the lower part, functioning to receive the assembly and secure it by quick-fit coupling with the female quick-fit coupling element defined inside the fixing base; e
- lower part, with the construction based on the technology of the conventional discharge chamber, distinguished by being provided with a male quick-fit coupling element.

Therefore, for the new enhanced discharge chamber, or enhanced APEX, only this lower part will be subject to the inevitable maintenance operations for verifying integrity within acceptable cut diameter parameters.

### B.2 FROM THE POINT OF VIEW OF THE DISCHARGE CHAMBER DURABILITY

In particular, the third part, described in the previous item and which will be the sole subject aimed at reducing the inevitable maintenance of the discharge chamber, is manufactured from possible blend formulations: Fcd = A + B, where:
- Fcd: Blend itself;
- A = thermoset polymer material highly resistant to abrasion; and
- B = ceramic material.

In turn, the fixing base and the male quick-fit coupling part, as they are not subjected to premature wear due to abrasion because they do not come into contact with the crushed ore flow (highly abrasive), can be manufactured from metallic material (steel).

### DETAILED DESCRIPTION OF THE INVENTION

The following detailed description should be read and interpreted with reference to the drawings, representing a preferred embodiment of the enhanced static machine element "discharge chamber," and is not intended to limit the scope of the invention, which is limited only to that explicitly set forth in the claims.

### A. CONSTRUCTIVE CONCEPT OF THE ENHANCED DISCHARGE CHAMBER

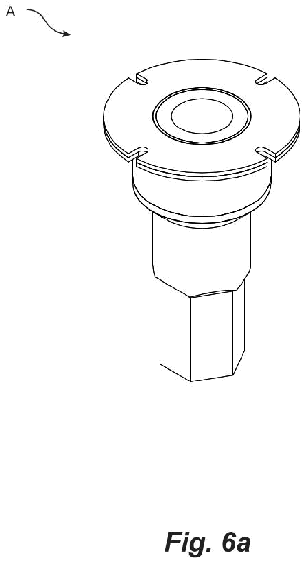

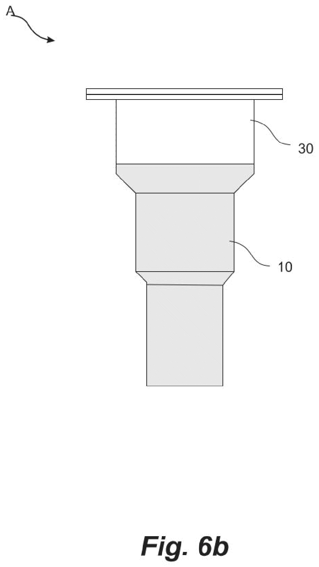

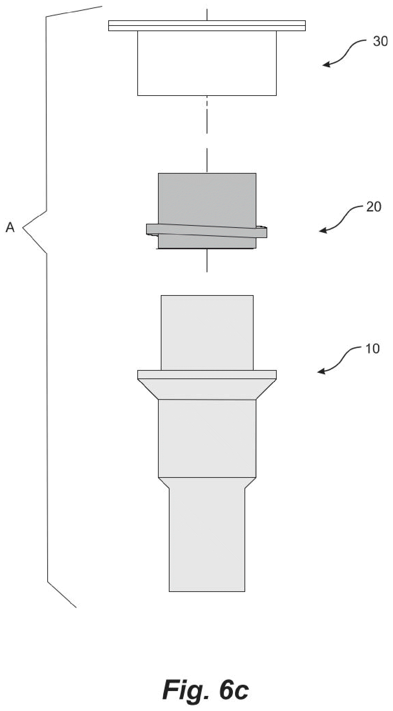

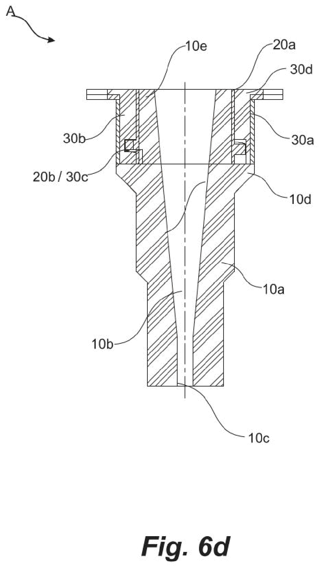

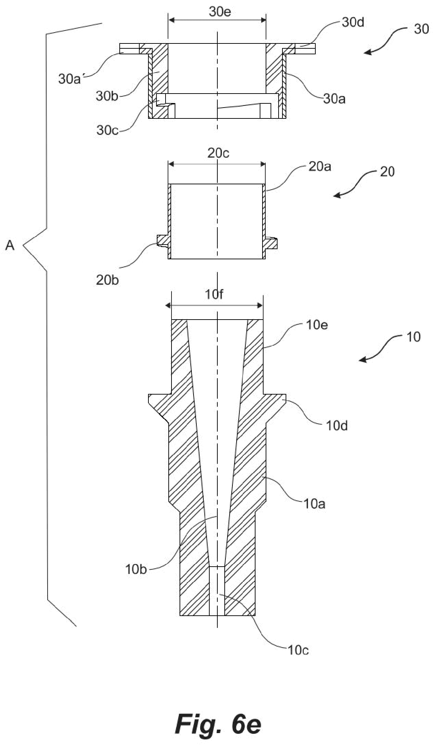

The enhanced static machine element "discharge chamber" (A) is disclosed in a preferred embodiment in Figures 6a to 6e, being formed by the following component parts:
(i) lower part (10), as generically illustrated in Figures 6a, 6b, and 6c, whose detailed constructive concept can be observed in Figures 6d and 6e, where the following elements are identified:
   - monolithic body (10a);
   - internal conical passage (10b);
   - regular internal tubular passage (10c), defined immediately below the lower end of the conical passage (10b);
   - support flange (10d), defined at the lower end of the extension (10e), with diameter (10f), functioning to accommodate the assembly and provide stability to the male quick-fit coupling part (20);
(ii) male quick-fit coupling part (20), as generically illustrated in Figures 6a, 6b, and 6c, whose detailed constructive concept can be observed in Figures 6d and 6e, where the following elements are identified:
   - tubular body (20a), with an external diameter (20c) slightly larger than the diameter (10f) of the extension (10e) of the lower part (10), thus ensuring solidary assembly between both elements;
   - male thread (10b), defined along the entire circumference of the lower portion of the tubular body (20a), functioning to provide engagement and quick locking with the female thread (30c) defined inside the body (30a) of the fixing base component (30); and
(iii) fixing base (30), as generally illustrated in Figures 6a, 6b, and 6c, whose detailed constructive concept can be observed in Figures 6d and 6e, where the following elements are identified:
   - a tubular shaped workpiece holder (30a) with a flattened flange (30a') defined around its upper nozzle;
   - a tubular segment part (30b), with an inner diameter (30e) greater than the outer diameter (20c) of the quick-fit coupling part (20);
   - a female thread (30c), defined along the entire internal circumference of the tubular segment part (30b), functioning to provide quick engagement with the male thread (20b) defined on the male quick-fit coupling part (20); and
   - a flattened flange (30d) defined around the entire contour of its upper nozzle.

### B. NATURE OF THE MATERIAL USED IN THE MANUFACTURE OF THE ENHANCED DISCHARGE CHAMBER

In view of the requirement to provide high abrasion resistance, thereby mitigating the wear of the operational element of the enhanced discharge chamber (A), each component part is specified with the following materials:
(i) lower part (10), shall be manufactured from a blend with possible formulations, Fcd = A + B, where:
   - thermoset material, such as polyurethane in combination with
      ceramic material, such as silicon carbide;
   - elastomeric material in combination with ceramic material, such as silicon carbide;
   - thermoset material only, such as polyurethane; and
   - elastomeric material only.
(ii) quick-fit coupling (20), can be made of metallic material, such as steel;
(iii) fixing base (30), can be made of metallic material, such as steel.

### B. ENHANCED DISCHARGE CHAMBER ASSEMBLY

It follows the sequential steps (see figure 6e for reference):
Step 1: Assembling of the male quick-fit coupling part (20) with the lower part (10), where the internal diameter (20c) of the body (20a) is a through fit with the external diameter (10f) of the extension (10e);
Step 2: Once the assembly of the male quick-fit coupling part (20) with the lower part (10) is obtained, the male thread (20b) is positioned inside the fixing base (30);
Step 3: The male thread (20b) is positioned in solidary engagement with the female thread (30c) defined inside the fixed base part (30);
Step 4: Rotating (e.g., a quarter turn) the assembly of the male quick-fit coupling part (20) with the lower part (10) relative to the fixing base (30), promoting a solidary displacement between the female thread (30c) and the male thread (20b), resulting in the locking of the parts and consolidating the enhanced static machine element "discharge chamber" (A), as illustrated in Figures 6a, 6b, and 6d;

### C. ASSEMBLY OF THE ENHANCED DISCHARGE CHAMBER ON THE HYDROCYCLONE

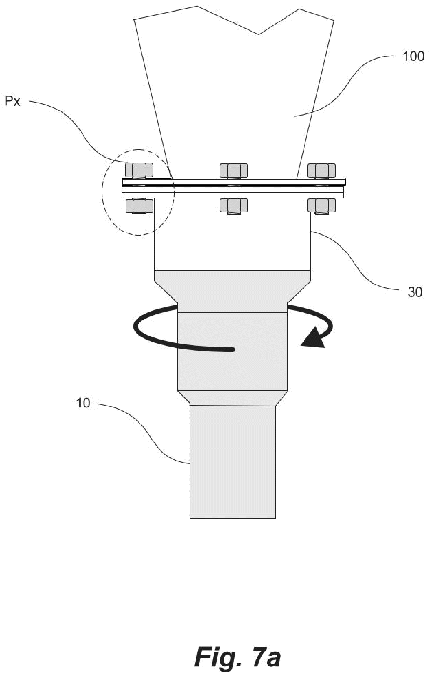

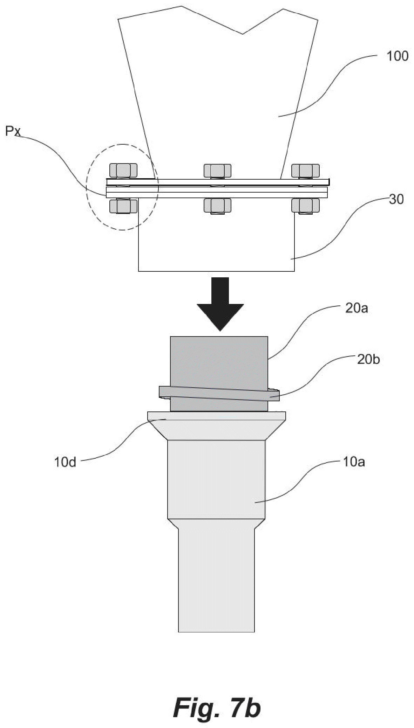

It follows the step:
Step 1: Assembly of the enhanced discharge chamber (A) to the lower portion of the section (Eq3), preferably of cylindrical tubular cross-section, using fastening elements (Px), as illustrated in Figure 7a.

### C. DISASSEMBLY OF THE IMPROVED DISCHARGE CHAMBER ON THE HYDROCYCLONE

It follows the step:
Step 1: Counter-rotating (e.g., a quarter turn) the assembly of the male quick-fit coupling part (20) with the lower part (10) relative to the fixing base (30), promoting a solidary displacement between the female thread (30c) and the male thread (20b), resulting in the unlocking and separation of the assembly of the male quick-fit coupling part (20) with the lower part (10), while the fixing base (30) remains connected to the lower portion of the upper section (Eq3) of the hydrocyclone (Eq).

### MATERIAL FACT

With the new constructive concept designed for the improved discharge chamber (A), or improved APEX, it is explicit that only the assembly of the male quick-fit coupling part (20) with the lower part (10) is of interest for inspection regarding the quality and maintenance of the cut diameter (H).

### TECHNICAL EFFECT OBTAINED

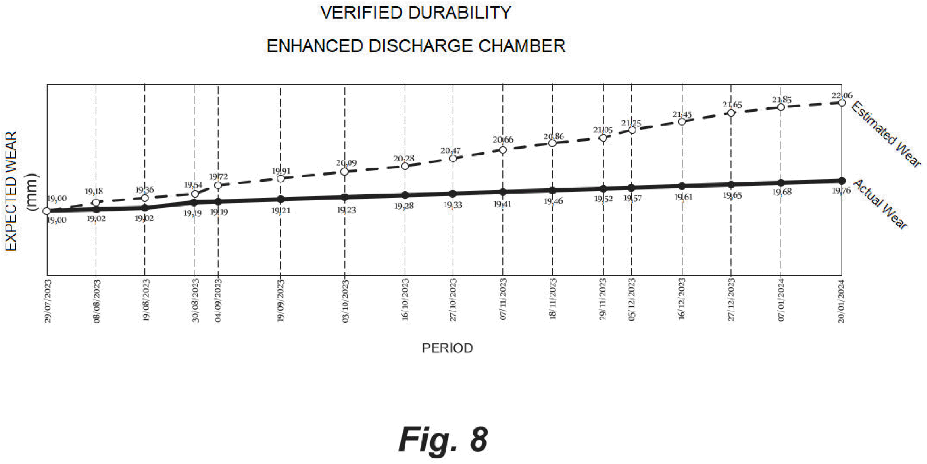

In particular, the implementation of the enhanced discharge chamber (A) in field tests resulted in the consolidation of the arguments described and justified above regarding the requirement for a significant increase in service life, which can be interpreted by observing the significant reduction in wear of the cut diameter (H), see Figures 6a to 6e, and can be appreciated through the graph in Figure 8, which indicates a considerable gain in durability (reduction of wear) over the evaluated period.

### CLOSURE

The selection of the preferred embodiment of the invention claimed in this specification, as described above, is provided for illustrative purposes only. Alterations, modifications, and variations may be made for any other embodiments of the enhanced discharge chamber (A), which may be conceived by those skilled in the art without, however, departing from the objective disclosed in the present patent, which is exclusively defined by the appended claims.

It is verified from what has been described and illustrated that the "ENHANCEMENT APPLIED TO THE STATIC MACHINE ELEMENT DISCHARGE CHAMBER INTEGRATED INTO A DEVICE KNOWN AS A HYDROCYCLONE USED IN THE STAGE OF VERIFYING ORE PARTICLE SIZE QUALITY AFTER THE CRUSHING STAGE, AND ITS ASSEMBLY, COUPLING, AND DECOUPLING PROCESSES OF THE HYDROCYCLONE BODY," as now claimed, complies with the regulations governing patents for inventions under the Industrial Property Law, and, based on the foregoing, deserves the corresponding privilege.

## Claims

1. **"AN ENHANCEMENT APPLIED TO THE ELEMENT OF THE STATIC MACHINE DISCHARGE CHAMBER THAT INTEGRATES THE EQUIPMENT KNOWN AS HYDROCYCLONE"** , said hydrocyclone being formed by at least one injector tube (Eq1), a vortex finder (Eq2); an upper section (Eq3), preferably with a cylindrical tubular cross-section, an intermediate section (Eq4), preferably with a conical tubular cross-section, a lower section (Eq5), in which the machine element discharge chamber is defined, also referred to by the acronym APEX, and an upper outlet (Eq6), through which the flow of ore of smaller particle size is discharged to the overflow, **characterized by** the improved discharge chamber (A) having a constructive concept comprising at least the following components (and respective elements):
(i) a lower part (10), comprising the elements: a monolithic body (10a), an internal conical passage (10b), an internal regular tubular passage (10c) defined immediately below the lower end of the conical passage (10b), a support flange (10d) defined at the lower end of the extension (10e), having a diameter (10f) configured to accommodate the assembly and provide stability for the male component of the male quick-fit coupling part (20);
(ii) a quick-fit coupling part (20), where the following elements are defined:
- tubular body (20a), with an external diameter (20c) slightly larger than the diameter (10f) of the extension (10e) of the lower part (10), thus ensuring solidary assembly between both elements;
- a male thread (10b), defined throughout the contour of the lower portion of the tubular body (10b), comprising the function of providing quick coupling and locking to the female thread element (30c) defined in the internal part of the body (30a) of the base fixing component (30);
(iii) a fixed base (30), where the following elements are identified:
- a tubular shaped workpiece holder (30a) with a flattened flange (30a') defined around its upper nozzle;
- a tubular segment part (30b), with an inner diameter (30e) greater than the outer diameter (20c) of the quick-fit coupling part (20);
- female thread (30c), defined along the entire internal circumference of the tubular segment part (30b), functioning to provide quick engagement with the male thread (20b) defined on the male quick-fit coupling part (20); and
- a flattened flange (30d) defined around the entire contour of its upper nozzle.

2. **"THE ENHANCEMENT APPLIED TO THE STATIC MACHINE ELEMENT DISCHARGE CHAMBER"** in which each part of the enhanced discharge chamber (A) of claim 1 is **characterised by**:
a lower part (10) must be made from a mixture (blend) of thermoset material in combination with ceramic material, or elastomeric material in combination with ceramic material or only thermoset material such as polyurethane or only elastomeric material;
a quick-fit male coupling part (20) can be made of metal material, e.g., steel;
a fixing base (30) can be made of metal material, e.g., steel.

3. **"THE ENHANCEMENT APPLIED TO THE STATIC MACHINE ELEMENT DISCHARGE CHAMBER"** of claim 2 where in an embodiment for the material nature of the part (10) the enhanced discharge chamber (A) is **characterized by** a blend of polyurethane in combination with silicon carbide.

4. **"AN ASSEMBLY PROCESS"** for the enhanced discharge chamber (A) of claim 1, **characterized by** the following sequential steps:
- Step 1 Assembling of the male quick-fit coupling part (20) with the lower part (10), where the internal diameter (20c) of the body (20a) is a through fit with the external diameter (10f) of the extension (10e);
- Step 2 Once the assembly of the male quick-fit coupling part (20) with the lower part (10) is obtained, the male thread (20b) is positioned inside the fixing base (30);
- Step 3: The male thread (20b) is positioned in solidary engagement with the female thread (30c) defined inside the fixed base part (30);
- Step 4 rotating (for example, by a quarter turn) the assembly comprising the male quick-fit coupling part (20) and the lower part (10) relative to the fixed base part (30), thereby promoting a solidary displacement between the female thread (30c) and the male thread (20b), resulting in locking of the parts and consolidating the improved static machine element discharge chamber (A).

5. **"THE ASSEMBLY PROCESS"** of the enhanced discharge chamber (A) of claim 1 on the hydrocyclone (Eq) **characterised by** assembling the enhanced discharge chamber (A), near the bottom of section (Eq3), preferably with a cylindrical tubular cross-section, by the use of fixing elements (Px).

6. **"A DISASSEMBLY PROCESS"** of the enhanced discharge chamber (A) of claim 1 of the hydrocyclone (Eq) **characterized by** counter-rotating (for example, by a quarter turn) the male quick-fit coupling part assembly (20) with the lower part (10) relative to the fixed base part (30), promoting a solidary displacement between the female thread (30c) and the male thread (20b), resulting in unlocking and separation of the assembly comprising the male quick-fit coupling part (20) and the lower part (10), while the fixed base part (30) remains connected to the lower portion of the upper section (Eq3) of the hydrocyclone (Eq).
